# EUROPÄISCHE PATENTSCHRIFT

(11) **EP 2 722 374 B1**
(45) Veröffentlichungstag und Bekanntmachung des Hinweises auf die Patenterteilung: **26.10.2016**
(21) Anmeldenummer: 12192017.7
(22) Anmeldetag: 09.11.2012
(51) Int. Cl.: C09J 7/02, C09J 7/04

(54) **Hoch abriebfestes technisches Klebeband mit doppellagigem Träger**
Extremely friction-resistant technical adhesive strip with double-layer backing
Bande adhésive technique très résistante à l'usure avec support à deux feuilles

(30) Priorität: 17.10.2012 DE 202012103975 U
(43) Veröffentlichungstag der Anmeldung: 23.04.2014
(73) Patentinhaber: Coroplast Fritz Müller GmbH & Co. KG, 42279 Wuppertal (DE)
(72) Erfinder: Lodde, Christoph, 59439 Holzwickede (DE); Wittig, Gülay, 44799 Bochum (DE)
(74) Vertreter: Patent- und Rechtsanwälte Dr. Solf & Zapf

(56) Entgegenhaltungen:
- EP-A1- 1 911 824
- EP-A1- 2 230 737
- WO-A1-2005/085379

## Beschreibung

Die Erfindung betrifft ein hoch abriebfestes technisches Klebeband, insbesondere ein auf sich selbst zu einer Klebebandrolle aufwickelbares Klebeband, vorzugsweise ein Kabelwickelband, mit einem doppellagigem bandförmigem Träger, der auf einer Seite mit einer druckempfindlichen Klebebeschichtung versehen ist, wobei der Träger eine erste, aus einem Gewebe bestehende textile Schichtlage und eine zweite textile Schichtlage umfasst, die vollflächig durch eine Klebverbindungsschicht fest miteinander verbunden sind.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern, als auch von verschiedenartigen Vliesklebebändern.

Die unterschiedlichen an Klebebänder gestellten Anforderungen verhalten sich teilweise hinsichtlich bestimmter Basisgrößen des Klebebandes, wie z. B. der Dicke, konträr zueinander. So ist - vorausgesetzt, andere Basisgrößen, wie das Trägermaterial, bleiben konstant - bei einem Klebeband mit zunehmender Dicke zwar mit einer höheren Abriebfestigkeit, aber auch mit einer verringerten Flexibilität und einer Verschlechterung des Flagging-Verhaltens zu rechnen. Um den unterschiedlichen Beanspruchungen in der Praxis gerecht zu werden, wurden daher zahlreiche technische Lösungen für Klebebänder vorgeschlagen, bei denen in der Regel eine, teilweise auch zwei oder mehr, der geforderten Eigenschaften besondere Bedeutung beigemessen wurde, während andere Eigenschaften als weniger bedeutsam in den Hintergrund traten.

Aus der DE 20 2005 013 009 U1 ist ein Klebeband bekannt, das einen textilen Träger aus zumindest einer Gewebeschicht und einer damit verbundenen, insbesondere aus einem Velours oder Vlies gebildeten Flächengebildeschicht und eine ein- oder beidseitig auf den Träger aufgebrachte Klebebeschichtung aufweist, wobei die Gewebeschicht als Feingewebeschicht mit mehr als 25 Fäden/cm in Längs- und Querrichtung ausgebildet ist. Neben einer vorteilhaft hohen Abriebfestigkeit weist das bekannte Band aber als nachteilhafte Eigenschaften auf, dass es nicht maschinell verarbeitbar ist und am Kabelsatz ein Flagging zeigt, so dass seine Enden jeweils beim Einsatz fixiert werden müssen.

Ein doppellagiges Klebeband ist auch aus der WO 2005/085379 A1 bekannt. In diesem Dokument wird insbesondere ein hoch abriebfestes und geräuschdämpfendes Klebeband für die Bandagierung von Kabelbäumen, insbesondere in Automobilen, beschrieben, das einen Träger mit einer ersten Deckschicht umfasst. Die erste Deckschicht besteht aus einem Velour, Gelege, Gewebe oder Gewirke, insbesondere aus einem PET-Filamentgewebe oder einem Polyamid-Gewebe. Die erste Deckschicht ist mit einer weiteren Schicht fest verbunden, die aus einem porösen Flächengebilde, wie einem Textil mit einer offenen, aber stabilen dreidimensionalen Struktur, oder wie aus einem Schaumstoff oder einer geschäumten Folie besteht. Diese Schicht kann insbesondere, im Sinne einer angestrebten hohen Geräuschdämpfung, ein hohes Flächengewicht von bis zu 500 g/m², insbesondere ein bevorzugtes Flächengewicht im Bereich von 150 bis 300 g/m², aufweisen. Die weitere Schicht kann anderseitig über ihre gesamte Fläche auf ihrer offenen Seite mit einer optional vorhandenen, dritten, als zweite Deckschicht bezeichneten Schicht fest verbunden sein, die vorzugsweise - wie die erste Deckschicht - aus einem Velour, Gelege, Gewebe oder Gewirke, insbesondere aus einem PET-Filamentgewebe oder einem Polyamid-Gewebe besteht. Der flächige Verbund aus der ersten Deckschicht, gegebenenfalls der zweiten Deckschicht, und der mit der ersten Deckschicht bzw. optional auch mit der zweiten Deckschicht verbundenen weiteren Schicht kann durch Verwendung eines Kaschierklebers oder klebefrei durch mechanische Verbundbildung wie Vermaschen, Übernähen, Vernadeln oder Wasserstrahlverfestigung erfolgen. An einer Ausführungsform des bekannten Bandes wurden Abriebfestigkeiten nach ISO 6722 bei einer Gewichtsbelastung von 10 N von über 8.000 Doppelhüben am 10-mm-Dorn gemessen. Auch an diesem bekannten Band ist nachteilig, dass es nicht maschinell verarbeitbar ist und eine hohe Banddicke aufweist.

In der EP 2 230 737 A1 wird ein zweilagiges textiles Klebeband beschrieben, bei dem die erste Lage aus einer Maschenware und die zweite Lage aus einer Maschenware und/oder einem Gewebe besteht, wobei die Schichten mit einem Kaschierkleber verbunden sind. Über die Wirkungsweise dieses Klebers in dem Laminatverbund ist nichts erwähnt. Es werden mögliche Kleberschichtdicken von 0,05 mm bis 1,0 mm genannt und es wird ausgeführt, dass der Kleber auch diskontinuierlich bzw. punktförmig aufgetragen werden kann, wodurch keine Klebverbindungsschicht mit einem einheitlichen Auftragsgewicht mehr vorliegt. Eine möglicherweise erforderliche Laminathaftkraft zwischen den Schichtlagen des Trägers ist dem Dokument nicht zu entnehmen. Es wird abschließend in dem Dokument auch pauschal erwähnt, dass eine Trägerkombination denkbar sei, bei der beide textile Schichtlagen aus einem Gewebe bestehen.

Gemäß der EP 1 911 824 A1 wird in einem Klebebandträger ein Polyestergewebe mit einem Maliwattvlies kombiniert. Für derartig hergestellte Träger liegt eine nach DIN EN 1939 bestimmte Laminathaftkraft in einem Bereich von 6 - 8 N/cm. Eine Reißfestigkeit des Klebebandes bei einer Prüfung nach DIN EN 14410 liegt im Bereich von 250 - 290 N/cm. Bei einer Prüfung der Abriebfestigkeit nach LV 312 wurden am 5-mm-Dorn 5300 - 6200 Hübe bis zum Verscheiß erreicht.

Der vorliegenden Erfindung liegt die Aufgabe zugrunde, ein Klebeband mit doppellagigem Träger zu schaffen, das bei hoher Abriebfestigkeit, insbesondere mit einer Abriebfestigkeit nach Klasse E gemäß LV 312, die vorzugsweise am 5-mm-Dorn bestimmt wird, sowohl manuell, als auch maschinell leicht verarbeitbar ist und eine geringe Dicke aufweist. Dabei soll das erfindungsgemäße Klebeband bevorzugt bei Vorhandensein eines verrottungsfesten Trägers auch schmiegsam und flexibel sein, ein im Vergleich mit Klebebändern gemäß dem Stand der Technik verbessertes Flagging-Verhalten zeigen und eine hohe Klebkraft aufweisen.

Erfindungsgemäß wird dies durch ein hoch abriebfestes technisches Klebeband, insbesondere ein auf sich selbst zu einer Klebebandrolle aufwickelbares Klebeband, vorzugsweise ein Kabelwickelband, mit folgenden Merkmalen erreicht: Das erfindungsgemäße Klebeband weist einen bandförmigen doppellagigen Träger auf, der auf einer Seite mit einer druckempfindlichen Klebebeschichtung versehen ist, wobei der Träger eine erste, aus einem Gewebe bestehende textile Schichtlage und eine zweite textile Schichtlage umfasst, die vollflächig durch eine Klebverbindungsschicht fest miteinander verbunden sind, wobei die Klebverbindungsschicht ein Flächengewicht im Bereich von 50 g/m² bis 300 g/m² aufweist, wobei die zweite textile Schichtlage aus einem Gewebe besteht, wobei das Gewebe der ersten textilen Schichtlage und das Gewebe der zweiten textilen Schichtlage jeweils ein Flächengewicht im Bereich von 100 g/m² bis 170 g/m² aufweist, wobei die Klebebeschichtung und die Klebverbindungsschicht aus einem Acrylat- oder Acetatklebstoff bestehen, und wobei eine nach DIN EN 1939 bestimmte Laminathaftkraft zwischen der ersten textilen Schichtlage und der zweiten textilen Schichtlage des Trägers größer ist als 10 N/cm und eine Reißfestigkeit des Klebebandes bei einer Prüfung nach DIN EN 14410 im Bereich von 300 N/cm bis 600 N/cm liegt, wobei die Klebverbindungsschicht aus einem Hotmeltklebstoff besteht, insbesondere aus einem Hotmeltklebstoff, der überwiegend aus einem Ethyl-Acrylat-Copolymer oder überwiegend aus einem Ethylen-Vinyl-Acetat-Copolymer besteht, wobei das Copolymer mit UV-vernetzbaren Acrylatharzen modifiziert ist und/oder einpolymerisierte UV-C-fotoreaktive Gruppen enthält.

Mit dem erfindungsgemäßen Klebeband werden unter Verzicht auf eine mit der ersten textilen Schichtlage verbundene Flächengebildeschicht, die aus einer offenen dreidimensionalen Struktur, wie einem Vlies oder einem Schaumstoff, besteht, bei geringer Dicke des erfindungsgemäßen Klebebandes exzellente Werte der Abriebfestigkeit erzielt, insbesondere wird eine Abriebfestigkeit gemäß der Klasse E nach LV 312 erreicht.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind. Hinsichtlich der Abriebbeständigkeit ist dabei in der LV 312 die in der nachstehenden Tabelle 1 wiedergegebene Klassifizierung vorgesehen.

**Tabelle 1: Einteilung der Abriebklassen nach LV 312**

| Abriebklasse | Anforderung (Anzahl Hübe) |
|---|---|
| A - kein Abriebschutz | < 100 |
| B - geringer Abriebschutz | 100-499 |
| C - mittlerer Abriebschutz | 500 - 999 |
| D - hoher Abriebschutz | 1000-4999 |
| E - sehr hoher Abriebschutz | 5000 - 14999 |
| F - extrem hoher Abriebschutz | 15000 - 29999 |
| G - Abriebschutz für Sonderanwendungen | ≥ 30000 |

Bei der Prüfung wird ein Dorn eingesetzt, der entweder einen Durchmesser von 10 mm oder einen Durchmesser von 5 mm hat. Bei gleicher erreichter Hubzahl bis zum Abriebgrenzwert liegt dabei die Abriebfestigkeit am 5-mm-Dorn höher, da bei einer gegebenen Abriebfestigkeit an einem solchen Dorn der Abriebgrenzwert eher - also schon bei einer geringeren Hubzahl - erreicht wird als am 10-mm-Dorn. So ist es möglich, dass ein Gewebe, das am Dorn mit 10 mm Durchmesser eine Abriebfestigkeit nach einer bestimmten Klasse erreicht, entsprechend der Prüfung am 5-mm-Dorn in eine Klasse tiefer eingestuft werden muss. Dies ist jedoch bei einem erfindungsgemäßen Klebeband nicht der Fall: Die Abriebklasse E wird sowohl am 10-mm-Dorn, als auch am 5-mm-Dorn erreicht.

Als weitere anwendungstechnisch wichtige Prüfungen sind in der genannten Richtlinie beispielsweise auch Prüfmethoden für die thermische Beständigkeit, die Kompatibilität von Klebebändern mit elektrischen Fahrzeugleitungen sowie für die Chemikalienbeständigkeit, das Geräuschdämpfungsverhalten, das Fogging- sowie für das Flagging-Verhalten beschrieben. Unter Flagging versteht man dabei eine Ablösung insbesondere schraubenförmig um einen Kabelsatz gewickelter Bänder, so dass deren Enden abstehen und, um dies zu vermeiden, jeweils beim Einsatz fixiert werden müssen.

Ein erfindungsgemäßes Klebeband ist deutlich schmiegsamer als die eingangs beschriebenen bekannten Klebebänder, hat eine weitaus geringere Neigung zum Flagging und kann sowohl manuell, als auch maschinell verarbeitet werden. Die Vorteilhaftigkeit der Erfindung zeigt sich dabei im Besonderen, wenn der Träger aus einem verrottungsfesten textilen Träger, wie beispielsweise aus Polyester-Gewebe, besteht, wodurch insbesondere neben der angestrebten Abriebfestigkeit auch eine hohe Reißfestigkeit gewährleistet werden kann. Aufgrund dieser Eigenschaften eignet sich das erfindungsgemäße Klebeband ausgezeichnet zum Umwickeln von Kabelsätzen.

Das erfindungsgemäße Klebeband kann dabei insbesondere eine optimal geringe Dicke von weniger als 0,5 mm, vorzugsweise eine Dicke im Bereich von 0,35 mm bis 0,48 mm, besonders bevorzugt im Bereich von 0,44 mm bis 0,46 mm, aufweisen.

Die Klebverbindungsschicht besteht aus einem Hotmeltklebstoff, und zwar aus einem Hotmeltklebstoff, der überwiegend aus einem Ethyl-Acrylat-Copolymer, wie einem Ethyl-Butyl-Acrylat oder einem Ethyl-Ethylen-Acrylat, oder überwiegend aus einem Ethylen-Vinyl-Acetat-Copolymer (EVA), besteht, wobei das jeweilige Copolymer mit UV-vernetzbaren Acrylatharzen modifiziert ist und/oder einpolymerisierte UV-C-fotoreaktive Gruppen, insbesondere in Seitenketten, enthält.

Der Klebstoff trägt einerseits zur Abrieberhöhung bei, andererseits sind dadurch eine Düsenbeschichtung des Trägers und Herstellung des erfindungsgemäßen Klebebandes mittels konventioneller Hotmelt-Coater möglich, die üblicherweise für Dispersions- und lösemittelhaltige Kleber ausgelegt sind.

Der Klebstoff kann insbesondere in einem drucklosen Beschichtungsverfahren, wie dem sogenannten "Curtain-Coating-Verfahren", aufgebracht werden. Gemäß diesem Verfahren fällt ein geschlossener Klebstofffilm auf das Substrat. Dadurch wird eine gleichmäßige Dicke und damit Grammatur der Klebstoffschicht erreicht. Es wird nur so viel Klebstoff aufgetragen, wie unbedingt benötigt wird. Dadurch kann erfindungsgemäß das Flächengewicht sowohl der Klebverbindungsschicht im Bereich von 50 bis 150 g/m², als auch der Klebebeschichtung bevorzugt im Bereich von etwa 70 g/m² bis 130 g/m², vorzugsweise von 80 g/m² bis 100 g/m², genau eingestellt werden. Die Grammatur der Klebverbindungsschicht und der Klebebeschichtung können auf die gleiche Größe eingestellt werden.

Der Verbund mittels des genannten Hotmeltklebstoffs wirkt sich gegenüber dem Einsatz der anderen erwähnten Klebstoffe mit steigendem Flächengewicht im erfindungsgemäß beanspruchten Bereich vorteilhafterweise auch überproportional erhöhend auf die Abriebfestigkeit aus.

Insbesondere für Polyester-Gewebe-Träger können erfindungsgemäß bevorzugt Fadenkonstruktionen mit 45 Kettfäden und 25 Schussfäden eingesetzt werden, wobei sich der Einsatz von bevorzugt gleichartigen Fäden in Kette und Schuss mit einer Feinheit von 167 dtex, die sich jeweils aus der gleichen Anzahl, insbesondere jeweils aus einer Anzahl von 36 Filamenten, zusammensetzen, besonders günstig auf eine erhöhte Abriebbeständigkeit auswirkt. Im Allgemeinen ist jedoch eine Feinheit im Bereich von 110 dtex bis 550 dtex für die Kett- und Schussfäden und eine Anzahl im Bereich von 24 bis 144 Filamenten pro Faden möglich, wobei aber mit zunehmender Filamentzahl von einer Verringerung der Abriebfestigkeit auszugehen ist.

Vorteilhaft erhöhend auf die Abriebbeständigkeit wirkt sich auch der Einsatz von texturierten Fäden aus. Mit Texturieren bezeichnet man in der Textilindustrie einen Vorgang, durch den Chemiefasern dauerhaft gekräuselt werden. Die glatten synthetischen Fäden erhalten durch diese Veredelung einen naturfaserähnlichen Charakter und einen textilen Griff. Das Texturieren geschieht meist unter dem Einfluss von Hitze und Druck, wobei eine Thermoplastizität der Fasern ausgenutzt wird. Durch eine Kräuselung der Fasern bei der Texturierung werden Faserschlingen erzeugt, durch die es zu einer Volumenzunahme kommt, wobei die elastische Dehnbarkeit ansteigt, während sich die Wärmeleitfähigkeit vermindert.

Zur Durchführung des Texturierens sind verschiedene, insbesondere mechanische, mechanisch-thermische und chemisch-thermische Verfahren bekannt. So wird bei dem sogenannten Falschdrahtverfahren ein Faden mit bis zu 1000 Drehungen/m verdrillt und heiß fixiert. Nach dem Zurückdrehen bleibt in den einzelnen Filamenten eine fixierte Spiralstruktur erhalten. Bei der Stauchkräuselung wird ein Faserverbund durch beheizte Walzen in eine Kammer mit keilförmig angeordneten Wänden gepresst und dadurch gestaucht und gekräuselt, wobei die Kräuselung durch die Kammerheizuung fixiert wird. Bei der Blastexturierung wird ein Filamentgarn durch eine Düse geführt, durch die gleichzeitig Druckluft gepresst wird. Beim Austritt aus der Düse verwirbelt die Luft, löst das Garn dadurch teilweise in seine Einzelfilamente auf und verschlauft sie danach wieder, wonach in einer Fixierzone eine abschließende Stabilisierung erfolgt, die auch mit einer Verfestigung und Schrumpfung verbunden ist.

Außerdem kann mit Vorteil auch vorgesehen sein, dass in dem Gewebe der ersten textilen Schichtlage und/oder in dem Gewebe der zweiten textilen Schichtlage jeweils die Kettfäden und/oder die Schussfäden intermingelt sind, wobei insbesondere 82 bis 96 Intermingelungspunkte pro Meter vorliegen. Das Intermingeln - auch Interlacing genannt - ist eine Zusatzausrüstung der Fäden, bei der die Fäden durch eine Verwirbelung mit Luft punktuell verflochten werden. Dabei wird der Zusammenhalt der einzelnen Filamente nicht durch ein Verdrehen, sondern durch eine Verschlingung der Filamente erreicht. Das Intermingeln kann mit glatten Fäden durchgeführt werden, es ist aber auch möglich, und erfindungsgemäß bevorzugt, ein Intermingeln im direkten Anschluss an ein Texturieren der Fäden durchzuführen.

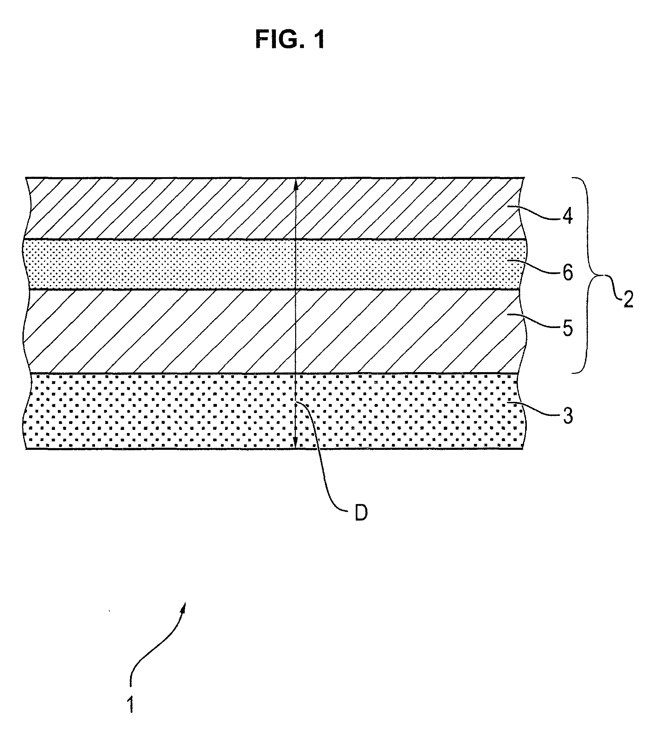

Weitere vorteilhafte Ausgestaltungsmerkmale der Erfindung sind in den Unteransprüchen sowie der folgenden Beschreibung enthalten. Anhand eines durch die beiliegende Zeichnung veranschaulichten erfindungsgemäßen Ausführungsbeispiels und zweier Vergleichsbeispiele wird die Erfindung näher erläutert. Dabei zeigt die einzige
- Fig. 1: in einer Querschnittsdarstellung eine Ausführung eines erfindungsgemäßen Klebebandes.

Wie Fig. 1 veranschaulicht, umfasst ein erfindungsgemäßes hoch abriebfestes technisches Klebeband 1, insbesondere ein ohne Interliner auf sich selbst wickelbares Kabelwickelband 1 für den Automobilbau, einen bandförmigen, doppellagigen Träger 2, der mindestens auf einer Seite mit einer selbstklebenden Klebeschicht 3 versehen ist, die aus einem Haftklebstoff besteht. Als Haftklebstoffe sind dabei an sich bekannte Klebstoffe, insbesondere UV-vernetzbare Klebstoffe (mit Eigenschaften wie nachstehend beispielhaft in Tabelle 2 angegeben) einsetzbar, wobei diese keiner weiteren Modifizierung bedürfen.

Der Träger 2 umfasst eine erste, aus einem Gewebe bestehende textile Schichtlage 4 und eine zweite textile Schichtlage 5, die vollfächig durch eine Klebverbindungsschicht 6 fest miteinander verbunden sind. Erfindungsgemäß ist vorgesehen, dass auch die zweite textile Schichtlage 5 aus einem Gewebe besteht, wobei das Gewebe der ersten textilen Schichtlage 4 und das Gewebe der zweiten textilen Schichtlage 5 jeweils ein Flächengewicht im Bereich von 80 g/m² bis 145 g/m² aufweist.

Bevorzugt kann es sich bei dem Gewebe der zweiten textilen Schichtlage 5 um das gleiche Gewebe handeln wie in der ersten textilen Schichtlage 4, insbesondere um ein Gewebe, das zu 100 Prozent aus Polyethylenterephthalat (PET) bestehenden Polyesterfasern gebildet ist. Ein solches Gewebe bildet einen verrottungsfesten Träger 2 und kann insbesondere jeweils ein Flächengewicht im Bereich von 90 g/m² bis 135 g/m², vorzugsweise von 130 g/m², aufweisen.

Die Klebverbindungsschicht 6 weist erfindungsgemäß ein Flächengewicht im Bereich von 50 g/m² bis 150 g/m² auf, wobei hier Werte im Bereich von 70 g/m² bis 130 g/m² bevorzugt sind.

Die Klebebeschichtung 3 kann insbesondere aus einem Acrylat- oder Acetatklebstoff bestehen, vorzugsweise aus einem Hotmeltklebstoff, wie er auch für die Herstellung der Klebverbindungsschicht 6 zur Anwendung kommt. Ein derartiger Hotmeltklebstoff kann auf der Basis eines Ethyl-Acrylat-Copolymers, wie einem Ethyl-Butyl-Acrylat oder einem Ethyl-Ethylen-Acrylat, oder auf der Basis eines Ethylen-Vinyl-Acetates hergestellt sein, d. h. überwiegend aus diesen Polymeren bestehen, wobei die Polymere mit UV-vernetzbaren Acrylatharzen modifiziert sein und/oder einpolymerisierte UV-C-fotoreaktive Gruppen, insbesondere in Seitenketten, enthalten können.

Eine typische Rezeptur kann dabei beispielsweise aus 60 Masseprozent bis 96 Masseprozent UV-vernetzbarem Acrylatharz (z. B. acResin® A 260 UV der Firma BASF SE, spezifische Angaben dazu nachstehend in Tabelle 2), aus 2 Masseprozent bis 20 Masseprozent EVA (z. B. Evatane® der Firma Arkema, spezifische Angaben dazu in Tabelle 3) oder Ethyl-Acrylat (z. B. Lotryl® EH, einem statistischen Copolymer aus Ethylen und 2-Ethylhexyl-Acrylat, oder Lotryl® BA, einem statistischen Copolymer aus Ethylen und Butylacrylat ebenfalls der Firma Arkema, spezifische Angaben zu Lotryl® nachstehend in Tabelle 4) sowie aus 2 Masseprozent bis 20 Masseprozent eines hydrierten Rosins (Rosin: 2R,3S,4S,5R,6R)-2-methylol-6-[(E)-3-phenylallyloxy]tetrahydropyran-3,4,5-triol, z. B. Foral™ 105-E der Firma Eastmann mit spezifischen Eigenschaften gemäß der Tabelle 5) bestehen. Letzteres ist ein thermoplastisches, aus Pentaerythrit und aus hoch stabilisiertem, hydriertem Kolophonium gebildetes Esterharz für Klebstoffe und Beschichtungen. Sein Einsatz bietet exzellente Vorteile in einer Funktion als Klebrigmacher oder als Modifizierharz im Klebstoff. Foral™-Harz bewirkt dabei eine hervorragende Beständigkeit gegenüber Oxidation und Verfärbungen durch Hitze und Alterung.

**Tabelle 2: Spezifische Angaben eines UV-vernetzbaren Acrylats auf der Basis von Butyl-Acrylat mit einpolymerisiertem Fotoinitiator**

| | Einheit | Bereich |
|---|---|---|
| Nichtflüchtige Anteile | % | 99% - 100% |
| K-Wert | - | 48-52 |
| Farbzahl | - | 0 - 100 |
| Viskosität | Pas | 40-60 |

**Tabelle 3: Spezifische Angaben eines Ethylen-Vinyl-Acetats**

| | Einheit | Bereich |
|---|---|---|
| MFI | g/10 min | 2,5 - 1000 |
| Schmelzpunkt | °C | 55 - 90 |
| Shore-A-Härte | - | 40 - 100 |

**Tabelle 4: Spezifische Angaben zu Ethyl-Butyl-Acrylat oder Ethyl-Ethylhexyl-Acrylat (Lotryl® EH oder BA)**

| | Einheit | Bereich |
|---|---|---|
| MFI | g/10 min | 100 - 1000 |
| Schmelzpunkt | °C | 65 - 75 |
| Shore-A-Härte | - | 45 - 75 |

**Tabelle 5: Spezifische Angaben zu Foral ™ 105-E**

| | Einheit | Bereich |
|---|---|---|
| Schmelzviskosität | mPas | |
| 120°C | | 20000 |
| 140°C | | 2000 |
| 160°C | | 410 |
| Schmelzpunkt | °C | 85 - 120 |
| Dichte bei 25°C | kg/dm³ | 1.06 |

Die Parameter in den vorstehenden Tabellen wurden dabei wie folgt bestimmt:
- Nichtflüchtige Anteile nach DIN EN ISO 3251,
- K-Wert nach DIN EN ISO 1628-1, 1 %-ig (m/V) in THF,
- Farbzahl nach DIN EN 6271-2 (Hazen),
- Viskosität nach Viskosität Physica MC101 (Oszillation) 100 1/s 130 °C, Carreau-Gahleitner,
- Schmelzindex MFI (Tabellen 3 und 4) nach ISO 1133 oder ASTM D 1238,
- Schmelzpunkt mittels dynamischer Differenzkalorimetrie (DSC),
- Shore-A-Härte nach ASTM D 2240,
- Schmelzviskosität nach ASTM D 3835,
- Dichte nach ASTM D 1505.

Hierzu ist noch Folgendes zu bemerken: Bei der K-Wert-Bestimmung handelt es sich um eine allgemein übliche Prüfmethode zur Bestimmung der Eigenviskosität, wobei der bestimmte Wert ein indirektes Maß für das Molekulargewicht ist. Die Farbzahl nach DIN EN 6271, Teil 2 ist ein Maß für die Verunreinigung des Butylacrylats, die bei der Polymerisation entstehen kann. Dieser Parameter besitzt im Hinblick auf die Erfindung nur eine untergeordnete Bedeutung. Bei der Bestimmung der Viskosität nach Physica MC 101 handelt es sich um eine interne Prüfmethode der BASF, deren Resultate sich nur unwesentlich von denen anderer vergleichbarer Prüfmethoden - wie mit Kegel-Platte-Systemen oder mit Platte-Platte-Systemen - unterscheiden.

Die Klebebeschichtung 3 und/oder die Klebverbindungsschicht 6 können jeweils ein Flächengewicht im Bereich von etwa 50 g/m² bis 150 g/m², vorzugsweise von 80 g/m² bis 100 g/m², aufweisen. Die Auftragung auf den Träger kann in technologisch vorteilhafter Weise unter Anwendung des oben erwähnten Curtain-Coating-Verfahrens erfolgen.

Die Bestimmung der Flächengewichte sowohl der Klebebeschichtung 3 und/oder der Klebverbindungsschicht 6, als auch der beiden aus Gewebe bestehenden textilen Schichtlagen 4, 5 erfolgt dabei in üblicher Weise nach der Norm DIN EN ISO 2286-2 "Mit Kautschuk oder Kunststoff beschichtete Textilien - Bestimmung der Rollencharakteristik - Teil 2: Bestimmung der flächenbezogenen Gesamtmasse, der flächenbezogenen Masse der Beschichtung und der flächenbezogenen Masse des Trägers".

Bei einer optimal geringen Dicke von weniger als 0,5 mm, vorzugsweise bei einer Dicke im Bereich von 0,35 bis 0,48 mm, besonders bevorzugt im Bereich von 0,44 mm bis 0,46 mm erreicht das erfindungsgemäße Klebeband 1 dabei eine Abriebbeständigkeit nach LV 312 von mindestens der Klasse E, insbesondere eine Abriebbeständigkeit im Bereich von 7500 bis 9200 Hüben, bestimmt an einem 5-mm-Dorn.

Das erfindungsgemäße Klebeband ist dabei manuell und maschinell verarbeitbar und weist mit Vorteil entsprechend der LV 312 eine Temperaturstabilität von 125 °C und mehr auf.

Bei einer hohen Schmiegsamkeit und Flexibilität des erfindungsgemäßen Klebebandes 1 kann eine Verbundfestigkeit zwischen der ersten textilen Schichtlage 4 und der zweiten textilen Schichtlage 5 des Trägers 2 eingestellt werden, die ausreichend ist, dass es bei der Verarbeitung, insbesondere beim Abziehen von einer Klebebandrolle, oder auch gegebenenfalls beim Wiederablösen von einem umwickelten Gegenstand, wie einem Kabelbaum, nicht zu einer Delamination der Schichtlagen 4, 5 kommt.

Eine nach DIN EN 1939 bestimmte Laminathaftkraft zwischen der ersten textilen Schichtlage 4 und der zweiten textilen Schichtlage 5 des Trägers 2 ist dabei größer als 10 N/cm und liegt vorzugsweise im Bereich von 12 N/cm bis 15 N/cm, während eine nach DIN EN 1939 bestimmte Klebkraft auf dem Bandrücken kleiner ist als die Laminathaftkraft zwischen den Schichtlagen 4, 5 und insbesondere im Bereich von 4,0 N/cm bis 15,0 N/cm, bevorzugt von 5,5 N/cm bis 8,0 N/cm, liegen kann. Eine nach DIN EN 1944 bestimmte Abrollkraft kann dabei insbesondere im Bereich von 2 N bis 10 N, bevorzugt von 3 N bis 7 N, liegen.

Mit dem erfindungsgemäßen Klebeband 1 sind dabei vorteilhafterweise hohe Klebkräfte erzielbar. So kann bei einer Prüfung nach DIN EN 1939 die Klebkraft auf Stahl Werte im Bereich von 5,0 N/cm bis 15,0 N/cm, vorzugsweise von 7,5 N/cm bis 9,0 N/cm, annehmen.

Typische bevorzugte Werte für zwei bevorzugte Ausführungen a) und b) des Gewebeaufbaus und die Charakteristik des Fasermaterials eines erfindungsgemäßen Klebebandes 1 sind der nachstehenden Tabelle 6 zu entnehmen.

**Tabelle 6: Gewebekonstruktionen**

| Merkmal | Einheit | Eigenschaft / Messwert |
|---|---|---|
| Trägermaterial | - | Polyestergewebe |
| Flächengewicht | g/m² | 130 |
| Faserart | - | 100 % Polyester |
| Kette | | |
| - Fadenanzahl | 1/cm | 45 |
| - Garnart | - | Filament, intermingelt, texturiert, spinndüsengefärbt |
| - Filamentanzahl | | 36 |
| - Garnstärke | dtex | 167 |
| Breitenbezogene | dtex/cm | > 7000 |
| Fadenstärke | | |
| Schuss | | |
| - Fadenanzahl | 1/cm | a) 25 - b) 22 |
| - Garnart | - | Filament, intermingelt, texturiert, spinndüsengefärbt |
| - Filamentanzahl | | 36 |
| - Garnstärke | dtex | 167 |
| Breitenbezogene | dtex/cm | a) > 3800 |
| Fadenstärke | | b) > 3000 |

Mit derartigen Geweben, die sowohl für die erste textile Schichtlage 4, als auch für die zweite textile Schichtlage 5 eingesetzt wurden, konnten bei einem erfindungsgemäßen Klebeband 1 die in der nachstehenden Tabelle 7 wiedergegebenen technischen Eigenschaften erzielt werden.

**Tabelle 7: Technische Daten eines erfindungsgemäßen PET-Gewebe-Verbund-Klebebandes im Vergleich**

| Prüfung | Einheit | Erfindung | Vergleich |
|---|---|---|---|
| Dicke | mm | 0,44-0,45 | 1,0-1,1 |
| Reißdehnung | % | 23-31 | 25-28 |
| Reißfestigkeit | N/cm | 371-421 | 250-290 |
| Klebkraft - Stahl | N/cm | 7,5-9,5 | 4,3-8,1 |
| - Bandrücken | N/cm | 5,5-8,0 | 3,0-6,9 |
| Abrollkraft | N/19mm | 3-7 | 3-7 |
| Flagging - 30 min | mm | 0-1 | 0-1 |
| - 24 h | mm | 0-1 | 0-1 |
| Abrieb 5-mm-Dorn | Hübe | 7500 - 9200 | 5300 - 6200 |
| Laminathaftkraft | N/cm | 12-15 | 6-8 |
| Geräuschdämpfung | KI. | B | E |
| Trägerfarbe | - | schwarz und/oder weiß | schwarz |
| Trägergewicht | | | |
| erste Schichtlage | g/m² | 130 | 120 |
| zweite Schichtlage | g/m² | 130 | 230 |
| Flächengewicht | | | |
| Klebebeschichtung (Haftkleber) | g/m² | 100 | 130 |
| Klebverbindungsschicht (Laminathaftkleber) | g/m² | 100 | 100 |

Die entsprechenden Parameterwerte sind zum Vergleich denjenigen eines marktüblichen Klebebandes mit einem zweilagigen Träger aus einer PET-Gewebeschicht und einer Vliesschicht gegenübergestellt.

Die in der Tabelle 7 angegebene Geräuschdämpfung nach LV 312 der Klasse B bedeutet, dass eine Geräuschdämpfung im Bereich von 2 dB (A) bis 5 dB (A) nach LV 312 vorliegt.

Neben der schon erwähnten hohen Abriebfestigkeit weist das erfindungsgemäße Klebeband 1 auch eine hohe Reißfestigkeit auf, die sich in Werten äußert, welche im Bereich von 300 N/cm bis 600 N/cm, vorzugsweise von 370 N/cm bis 421 N/cm, bei einer Prüfung nach DIN EN 14410 liegen. Die Reißdehnung lag dabei, wie in Tabelle 7 angegeben, im Bereich von 23 Prozent bis 31 Prozent. Sie sollte vorzugsweise größer sein als 20 Prozent.

Vergleicht man die in Tabelle 7 aufgeführten Parameter des erfindungsgemäßen Klebebandes 1 mit einem (hinsichtlich seiner Eigenschaften nicht in der Tabelle aufgeführten) weiteren bekannten marktüblichen Klebeband, welches aus demselben Trägermaterial besteht, jedoch nur einlagig ausgeführt ist, wobei es mit einer Klebebeschichtung versehen ist, die eine Grammatur im Bereich von etwa 80 g/m² bis 85 g/m² aufweist, so zeigen sich am erfindungsgemäßen Band überraschend folgende synergistischen Sachverhalte.

Während das bekannte Band mit einlagigem Träger eine Dicke (gemessen nach DIN 1942) im Bereich von 0,24 mm bis 0,25 mm aufweist, hat das erfindungsgemäße Klebeband 1 eine Dicke D, die kleiner ist als die doppelte Dicke des einlagigen Bandes. Die vorstehend genannten Reißfestigkeitswerte nach der Tabelle 3 sind dabei ebenfalls geringer als das Doppelte der Reißfestigkeit des bekannten Bandes. Letztere liegen - bei einer Reißdehnung im Bereich von 35 Prozent bis 40 Prozent - im Bereich von 270 N/cm bis 315 N/cm bei einer Prüfung nach DIN EN 14410.

Gleichzeitig liegen aber vorteilhafterweise die Abriebfestigkeitswerte des erfindungsgemäßen Klebebandes 1 mit den in der Tabelle 3 genannten aber überproportional höher als die des einlagigen Bandes, welches mit einer erreichten Hubzahl nach LV 312 von 1050 bis 1200 - also weniger als einem Siebentel bzw. Achtel des erfindungsgemäßen Klebebandes 1 - in die Abriebklasse D einzuordnen ist.

Die Schwankungsbreite der Klebkraft des bekannten Bandes ist dabei mit Werten von 4,0 N/cm bis 14,1 N/cm auf Stahl (Differenz der Bereichgrenzen: 10,1 N/cm) und 6,0 N/cm bis 12,8 N/cm (Differenz der Bereichgrenzen: 6,8 N/cm) ungleich größer als bei dem erfindungsgemäßen Klebeband 1, bei dem die Bereichsgrenzen der Klebkraft entsprechend Tabelle 3 nur um 2,0 N/cm - gemessen auf Stahl - und nur um 2,5 N/cm - gemessen auf dem Bandrücken - auseinanderlagen. Die Klebkraft ist folglich vorteilhafterweise mit dem erfindungsgemäßen Klebeband 1 sehr viel subtiler, also innerhalb engerer Grenzen, einstellbar. Die Abrollkraft des bekannten einlagigen Bandes liegt dabei im gleichen Bereich wie die des erfindungsgemäßen.

Im Hinblick auf die in der Tabelle 7 aufgeführten Flächengewichte der Klebebeschichtung 3 und der Klebverbindungsschicht 6 ist zu bemerken, dass diese im dargestellten Ausführungsbeispiel beide bei einheitlich 100 g/m² liegen. Dennoch ist die Laminathaftkraft - bestimmt nach DIN 1939 - des erfindungsgemäßen Klebebandes 1 zwischen der ersten textilen Schichtlage 4 und der zweiten textilen Schichtlage 5 des Trägers 2 größer als die nach der gleichen Norm ermittelte Klebkraft auf dem Bandrücken. Dies ist erforderlich, damit es bei einem Abziehen des Klebebandes 1 von der Rolle nicht zu einer Delamination der Schichtlagen 4, 5 kommt. Die vergleichsweise größere Laminathaftkraft kann dabei durch eine stärkere Vernetzung des Klebers in der Klebverbindungsschicht 6, beispielsweise durch eine höhere Strahlungsleistung einer dazu eingesetzten UV-Quelle, durch eine bei gegenüber der Raumtemperatur bis in den Bereich von 50 °C bis 140 °C erhöhte Temperatur oder durch einen um 0,05 bar bis 6,0 bar gegenüber dem Atmosphärendruck erhöhten Druck beim Laminierungsprozess der textilen Schichtlagen 4, 5, oder durch eine von der Kleberrezeptur in der Klebebeschichtung 3 abweichende Rezeptur des Klebers in der Klebverbindungsschicht 6 erzielt werden.

Wie oben erwähnt, werden von der Firma BASF SE unter dem Markenzeichen acResin® Kleber für die UV-Vernetzung angeboten. Die Polymerketten der in diesen Klebern enthaltenen Acrylate werden aus den gleichen Acrylatmonomeren hergestellt, wie sie in Acrylat-Haftklebstoffsystemen auf Dispersions- oder Lösemittelbasis zu finden sind. Bei einer Bestrahlung mit UV-C-Licht (250 - 260 nm) werden jedoch einpolymerisierte UV-C-reaktive Gruppen zu Vernetzungsreaktionen mit benachbarten Acrylatketten angeregt. Eine solche Vernetzung läuft dabei sehr schnell, aber genau kontrollierbar ab und erfolgt nur so lange, wie das UV-Licht einwirkt. Die einpolymerisierten, insbesondere in Seitenketten des acResins® befindlichen, fotoreaktiven Gruppen des Polymers reagieren dabei mit einer beliebigen C-H-Gruppe einer Nachbarkette. So entsteht die für Haftklebstoffe charakteristische Vernetzungsstruktur. Eine typische Größe der Haftkraft einer Klebebeschichtung 3, die auf diese Weise einstellbar ist, liegt bei etwa 6 N/cm nach DIN 1939. Durch die Modifikation eines solchen acResin®-Klebers mit Harzen und/oder siegelfähigen Elastomeren, vor allem mit den oben erwähnten, mit den Eigenschaften, wie sie in den Tabellen 3 bis 5 aufgeführt sind, können - insbesondere in der erfindungsgemäß vorgesehenen Klebverbindungsschicht 6 - vergleichsweise höhere Laminat-Haftkräfte eingestellt werden, insbesondere Haftkräfte, welche größer sind als 10 N/cm nach DIN 1939.

Abweichend von den Angaben für das in Tabelle 7 dargestellte Ausführungsbeispiel können - bei gleicher oder auch bei unterschiedlicher Kleberrezeptur - natürlich unterschiedliche Haftkräfte in der Klebebeschichtung 3 und in der Klebverbindungsschicht 6 auch durch entsprechend unterschiedlich gewählte Klebergrammaturen eingestellt werden. So kann der Kleberauftrag in den klebenden Schichten 3, 6 in den angegebenen Bereichen und Vorzugsbereichen entsprechend frei kombiniert werden, wobei in jedem Fall gewährleistet werden kann, dass in der Klebverbindungsschicht 6 die genannte Laminathaftkraft von mehr als 10 N/cm nach DIN 1939 vorliegt.

Wie schon aus dem Vorstehenden hervorgeht, ist die Erfindung ist nicht auf die beschriebenen Ausführungsbeispiele beschränkt, sondern umfasst auch alle im Sinne der Erfindung gleichwirkenden Ausführungen.

So sind z. B. in den Ausführungsbeispielen in den Geweben der ersten textilen Schichtlage 4 und/oder in den Geweben der zweiten textilen Schichtlage 5 jeweils die Kettfäden und die Schussfäden gleichartig beschaffen, was sich positiv auf eine hohe Abriebfestigkeit auswirkt, jedoch nicht in jedem Fall vorliegen muss.

Des Weiteren ist es sowohl - wie in Tabelle 2 angegeben - bevorzugt möglich, den Träger 2 aus einem spinndüsengefärbten Garn- bzw. Fadenmaterial herzustellen, als auch den Träger 2 einer Dispersionsfärbung zu unterwerfen. Bevorzugte, durch den Einsatz geeigneter Farbpigmente - vorzugsweise in Polyestermaterial - erzeugte Farbkombinationen in den textilen Schichtlagen 4, 5 eines erfindungsgemäßen Klebebandes 1 sind dabei schwarz/schwarz, schwarz/weiß und weiß/weiß. Einer solchen Färbung entspricht die Angabe "schwarz und/oder weiß" in Tabelle 3. Die textilen Schichtlagen 4, 5 können also jeweils die gleiche oder unterschiedliche Farben aufweisen.

Gegebenenfalls können die Titer der Fäden und damit auch die breitenbezogene Fadenstärke der Kettfäden und/oder die längenbezogene Fadenstärke der Schussfäden -jeweils bestimmt durch Multiplikation der jeweiligen Fadenzahl je Längeneinheit mit dem jeweiligen Titer der Fäden - von den in der Tabelle 6 angegebenen Werten abweichen.

Der Fachmann kann die Erfindung auch durch weitere vorteilhafte technische Maßnahmen ergänzen, ohne dass der Rahmen der Erfindung verlassen wird. So fördert beispielsweise eine Kalandrierung des Trägers 2 bzw. der ersten textilen Schichtlage 4 und/oder der zweiten textilen Schichtlage 5 vor ihrer Laminierung eine Verringerung der Permeabilität des Gewebes für den Klebstoff in der Klebeschicht 3 und/oder in der Klebverbindungsschicht 6. Dies kommt dadurch zum Ausdruck, dass die Luftdurchlässigkeit des Gewebes gemessen nach DIN 53 887 bei einem Prüfdruck von 500 Pa bevorzugt geringer sein kann als 200 l/m²s. Konkret kann sie z. B. etwa bei 100 l/m²s liegen, und bei einer Messung unter einem Prüfdruck von 200 Pa kann sie bevorzugt geringer sein als 100 l/m²s und konkret bei etwa 50 l/m²s liegen. Auch bei eventuell während des Auftragens des Klebers vorhandener niedriger Viskosität des Klebstoffs kommt es so nicht zu einem Klebstoffdurchschlag durch den Träger 2.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: Klebeband
- 2: Träger
- 3: Klebstoffbeschichtung
- 4: erste textile Schichtlage von 2
- 5: erste textile Schichtlage von 2
- 6: Klebverbindungsschicht

- D: Dicke von 1

## Patentansprüche

1. Hoch abriebfestes technisches Klebeband (1), insbesondere auf sich selbst zu einer Klebebandrolle aufwickelbares Klebeband (1), vorzugsweise Kabelwickelband (1), mit einem bandförmigem doppellagigem Träger (2), der auf einer Seite mit einer druckempfindlichen Klebebeschichtung (3) versehen ist, wobei der Träger (2) eine erste, aus einem Gewebe bestehende textile Schichtlage (4) und eine zweite textile Schichtlage (5) umfasst, die vollflächig durch eine Klebverbindungsschicht (6) fest miteinander verbunden sind, wobei die Klebverbindungsschicht (6) ein Flächengewicht im Bereich von 50 g/m² bis 300 g/m² aufweist, wobei die zweite textile Schichtlage (5) aus einem Gewebe besteht, wobei das Gewebe der ersten textilen Schichtlage (4) und das Gewebe der zweiten textilen Schichtlage (5) jeweils ein Flächengewicht im Bereich von 100 g/m² bis 170 g/m² aufweist, wobei die Klebebeschichtung (3) und die Klebverbindungsschicht (6) aus einem Acrylat- oder Acetatklebstoff bestehen, und wobei eine nach DIN EN 1939 bestimmte Laminathaftkraft zwischen der ersten textilen Schichtlage (4) und der zweiten textilen Schichtlage (5) des Trägers (2) größer ist als 10 N/cm und eine Reißfestigkeit des Klebebandes (1) bei einer Prüfung nach DIN EN 14410 im Bereich von 300 N/cm bis 600 N/cm liegt, wobei die Klebverbindungsschicht (6) aus einem Hotmeltklebstoff besteht, insbesondere aus einem Hotmeltklebstoff, der überwiegend aus einem Ethyl-Acrylat-Copolymer oder überwiegend aus einem Ethylen-Vinyl-Acetat-Copolymer besteht, wobei das Copolymer mit UV-vernetzbaren Acrylatharzen modifiziert ist und/oder einpolymerisierte UV-C-fotoreaktive Gruppen enthält.

2. Klebeband (1) nach Anspruch 1,
**dadurch gekennzeichnet, dass** das Gewebe der zweiten textilen Schichtlage (5) das gleiche Gewebe ist, wie das Gewebe der ersten textilen Schichtlage (4).

3. Klebeband (1) nach Anspruch 1 oder 2,
**dadurch gekennzeichnet, dass** das Gewebe der ersten textilen Schichtlage (4) und/oder das Gewebe der zweiten textilen Schichtlage (5) jeweils ein Flächengewicht von 130 g/m² aufweist.

4. Klebeband (1) nach einem der Ansprüche 1 bis 3,
**dadurch gekennzeichnet, dass** das Gewebe der ersten textilen Schichtlage (4) und/oder das Gewebe der zweiten textilen Schichtlage (5) jeweils aus, insbesondere zu 100 Prozent aus Polyethylenterephthalat bestehenden, Polyesterfasern gebildet ist.

5. Klebeband (1) nach einem der Ansprüche 1 bis 4,
**dadurch gekennzeichnet, dass** die Klebverbindungsschicht (6) ein Flächengewicht im Bereich von 80 g/m² bis 150 g/m² aufweist.

6. Klebeband (1) nach einem der Ansprüche 1 bis 5,
**dadurch gekennzeichnet, dass**, wenn der Hotmeltklebstoff der Klebverbindungsschicht (6) überwiegend aus einem Ethyl-Acrylat-Copolymer besteht, dieses ein Ethyl-Butyl-Acrylat oder ein Ethyl-Ethylen-Acrylat ist, wobei vorzugsweise, wenn das Copolymer einpolymerisierte UV-C-fotoreaktive Gruppen enthält, diese sich in Seitenketten befinden.

7. Klebeband (1) nach einem der Ansprüche 1 bis 6,
**dadurch gekennzeichnet, dass** die Klebebeschichtung (3) aus dem gleichen Hotmeltklebstoff wie die Klebverbindungsschicht (6) besteht.

8. Klebeband (1) nach einem der Ansprüche 1 bis 7,
**dadurch gekennzeichnet, dass** die Klebebeschichtung (3) ein Flächengewicht im Bereich von etwa 50 g/m² bis 300 g/m², vorzugsweise von 80 g/m² bis 150 g/m², aufweist.

9. Klebeband (1) nach einen der Ansprüche 1 bis 8, **gekennzeichnet durch** eine Dicke (D) von weniger als 0,5 mm, vorzugsweise eine Dicke (D) im Bereich von 0,35 mm bis 0,48 mm, besonders bevorzugt eine Dicke (D) im Bereich von 0,44 mm bis 0,46 mm.

10. Klebeband (1) nach einem der Ansprüche 1 bis 9, **gekennzeichnet durch** eine Klebkraft auf Stahl im Bereich von 5,0 N/cm bis 15,0 N/cm, vorzugsweise im Bereich von 7,5 N/cm bis 9,0 N/cm, bei einer Prüfung nach DIN EN 1939.

11. Klebeband (1) nach einem der Ansprüche 1 bis 10, **gekennzeichnet durch** eine Klebkraft auf dem Bandrücken im Bereich von 4,0 N/cm bis 15,0 N/cm, vorzugsweise im Bereich von 5,5 N/cm bis 8,0 N/cm bei einer Prüfung nach DIN EN 1939.

12. Klebeband (1) nach einem der Ansprüche 1 bis 11, **gekennzeichnet durch** eine Abrollkraft im Bereich von 2 N bis 10 N, vorzugsweise von 3 N bis 7 N, bei einer Prüfung nach DIN EN 1944.

13. Klebeband (1) nach einem der Ansprüche 1 bis 12, **gekennzeichnet durch** eine Reißfestigkeit im Bereich von 370 N/cm bis 421 N/cm bei einer Prüfung nach DIN EN 14410.

14. Klebeband (1) nach einem der Ansprüche 1 bis 13, **gekennzeichnet durch** eine Reißdehnung, die größer ist als 20 Prozent und bevorzugt im Bereich von 23 Prozent bis 31 Prozent bei einer Prüfung nach DIN EN 14410 liegt.

15. Klebeband (1) nach einem der Ansprüche 1 bis 14,
**dadurch gekennzeichnet, dass** eine nach DIN 1939 bestimmte Laminathaftkraft zwischen der ersten textilen Schichtlage (4) und der zweiten textilen Schichtlage (5) des Trägers (2) im Bereich von 12 N/cm bis 15 N/cm liegt.

16. Klebeband (1) nach einem der Ansprüche 1 bis 15, **gekennzeichnet durch** eine Abriebbeständigkeit nach LV 312 von mindestens der Klasse E, insbesondere **durch** eine Abriebbeständigkeit im Bereich von 7500 bis 9200 Hüben, bestimmt an einem 5-mm-Dorn.

17. Klebeband (1) nach einem der Ansprüche 1 bis 16, **gekennzeichnet durch** eine Geräuschdämpfung nach LV 312 von mindestens der Klasse B, vorzugsweise eine Geräuschdämpfung im Bereich von 2 dB (A) bis 5 dB (A) nach LV 312.

18. Klebeband (1) nach einem der Ansprüche 1 bis 17,
**dadurch gekennzeichnet, dass** der Träger (2) kalandriert und verfestigt ist, so dass die Luftdurchlässigkeit des Gewebes geringer ist als 200 l/m²s und vorzugsweise im Bereich von 50 l/m²s bis 100 l/m²s liegt, gemessen nach DIN 53 887 bei einem Prüfdruck von 500 Pa.

19. Klebeband (1) nach einem der Ansprüche 1 bis 18,
**dadurch gekennzeichnet, dass** in dem Gewebe der ersten textilen Schichtlage (4) und/oder in dem Gewebe der zweiten textilen Schichtlage (5) jeweils die Kettfäden und die Schussfäden gleichartig beschaffen sind.

20. Klebeband (1) nach einem der Ansprüche 1 bis 19,
**dadurch gekennzeichnet, dass** in dem Gewebe der ersten textilen Schichtlage (4) und/oder in dem Gewebe der zweiten textilen Schichtlage (5) jeweils die Kettfäden und/oder die Schussfäden eine Feinheit im Bereich von 110 dtex bis 550 dtex, vorzugsweise von 167 dtex, aufweisen.

21. Klebeband (1) nach einem der Ansprüche 1 bis 20,
**dadurch gekennzeichnet, dass** in dem Gewebe der ersten textilen Schichtlage (4) und/oder in dem Gewebe der zweiten textilen Schichtlage (5) sich jeweils die Kettfäden und/oder die Schussfäden aus einer Anzahl im Bereich von 24 bis 144 Filamenten, bevorzugt aus 36 Filamenten, zusammensetzen.

22. Klebeband (1) nach einem der Ansprüche 1 bis 21,
**dadurch gekennzeichnet, dass** in dem Gewebe der ersten textilen Schichtlage (4) und/oder in dem Gewebe der zweiten textilen Schichtlage (5) jeweils die Kettfäden und/oder die Schussfäden texturiert sind.

23. Klebeband (1) nach einem der Ansprüche 1 bis 22,
**dadurch gekennzeichnet, dass** in dem Gewebe der ersten textilen Schichtlage (4) und/oder in dem Gewebe der zweiten textilen Schichtlage (5) jeweils die Kettfäden und/oder die Schussfäden intermingelt sind, wobei insbesondere 82 bis 96 Intermingelungspunkte pro Meter vorliegen.

24. Klebeband (1) nach einem der Ansprüche 1 bis 23,
**dadurch gekennzeichnet, dass** im Träger (2) eine der Farbkombinationen schwarz/schwarz, schwarz/weiß und weiß/weiß für die textilen Schichtlagen (4, 5) vorliegt.

## Claims

1. Extremely abrasion-resistant technical adhesive tape (1), particularly an adhesive tape (1) that is self-windable into an adhesive tape roll, preferably a cable-wrapping tape (1), having a tape-shaped double-ply carrier (2) provided a pressure-sensitive adhesive coating (3) on one side, wherein the carrier (2) comprises a first textile-type layer ply (4) consisting of a woven fabric and a second textile-type layer ply (5), which are firmly bonded together whole-areally by an adhesive bonding layer (6), wherein the adhesive bonding layer (6) has a basis weight in the range from 50 g/m² to 300 g/m², wherein the second textile-type layer ply (5) consists of a woven fabric, wherein the woven fabric of the first textile-type layer ply (4) and the woven fabric of the second textile-type layer ply (5) each have a basis weight in the range from 100 g/m² to 170 g/m², wherein the adhesive coating (3) and the adhesive bonding layer (6) consist of an acrylate or acetate adhesive, and wherein the peel force between the first textile-type layer ply (4) and the second textile-type layer ply (5) of the carrier (2) is greater than 10 N/cm as determined to DIN EN 1939 and the adhesive tape (1) has a breaking strength in the range from 300 N/cm to 600 N/cm in a test to DIN EN 14410, wherein the adhesive bonding layer (6) consists of a hot-melt adhesive, in particular of a hot-melt adhesive consisting predominantly of an- ethyl acrylate copolymer or predominantly of an ethylene-vinyl acetate copolymer, wherein the copolymer is modified with UV-crosslinkable acrylate resins and/or contains UV-C-photoreactive groups in polymerized form.

2. Adhesive tape (1) according to Claim 1,
**characterized in that** the woven fabric of the second textile-type layer ply (5) is the same woven fabric as the woven fabric of the first textile-type layer ply (4).

3. Adhesive tape (1) according to Claim 1 or 2,
**characterized in that** the woven fabric of the first textile-type layer ply (4) and/or the woven fabric of the second textile-type layer ply (5) each have a basis weight of 130 g/m².

4. Adhesive tape (1) according to any of Claims 1 to 3,
**characterized in that** the woven fabric of the first textile-type layer ply (4) and/or the woven fabric of the second textile-type layer ply (5) are each formed of polyester fibres, in particular of polyester fibres consisting of polyethylene terephthalate to an extent of 100%.

5. Adhesive tape (1) according to any of Claims 1 to 4,
**characterized in that** the adhesive bonding layer (6) has a basis weight in the range from 80 g/m² to 150 g/m².

6. Adhesive tape (1) according to any of Claims 1 to 5,
**characterized in that** when the hot-melt adhesive of the adhesive bonding layer (6) consists predominantly of an ethyl acrylate copolymer, this is an ethyl-butyl acrylate or an ethyl-ethylene acrylate, wherein when the copolymer contains UV-C-photoreactive groups in polymerized form, these are preferably situated in side chains.

7. Adhesive tape (1) according to any of Claims 1 to 6,
**characterized in that** the adhesive coating (3) consists of the same hot-melt adhesive as the adhesive bonding layer (6).

8. Adhesive tape (1) according to any of Claims 1 to 7,
**characterized in that** the adhesive coating (3) has a basis weight in the range from about 50 g/m² to 300 g/m², preferably from 80 g/m² to 150 g/m².

9. Adhesive tape (1) according to any of Claims 1 to 8,
**characterized by** a thickness (D) of less than 0.5 mm, preferably a thickness (D) in the range from 0.35 mm to 0.48 mm, more preferably a thickness (D) in the range from 0.44 mm to 0.46 mm.

10. Adhesive tape (1) according to any of Claims 1 to 9,
**characterized by** an adhesion to steel in the range from 5.0 N/cm to 15.0 N/cm, preferably in the range from 7.5 N/cm to 9.0 N/cm, in a test to DIN EN 1939.

11. Adhesive tape (1) according to any of Claims 1 to 10,
**characterized by** an adhesion to backing in the range from 4.0 N/cm to 15.0 N/cm, preferably in the range from 5.5 N/cm to 8.0 N/cm in a test to DIN EN 1939.

12. Adhesive tape (1) according to any of Claims 1 to 11,
**characterized by** an unwind adhesion in the range from 2 N to 10 N, preferably from 3 N to 7 N, in a test to DIN EN 1944.

13. Adhesive tape (1) according to any of Claims 1 to 12,
**characterized by** a breaking strength in the range from 370 N/cm to 421 N/cm in a test to DIN EN 14410.

14. Adhesive tape (1) according to any of Claims 1 to 13,
**characterized by** a breaking extension greater than 20 per cent and preferably in the range from 23 per cent to 31 per cent in a test to DIN EN 14410.

15. Adhesive tape (1) according to any of Claims 1 to 14,
**characterized in that** a peel force between the first textile-type layer ply (4) and the second textile-type layer ply (5) of the carrier (2) is in the range from 12 N/cm to 15 N/cm as determined to DIN 1939.

16. Adhesive tape (1) according to any of Claims 1 to 15,
**characterized by** an LV 312 abrasion resistance of at least class E, in particular by an abrasion resistance in the range from 7500 to 9200 strokes, determined on a 5 mm mandrel.

17. Adhesive tape (1) according to any of Claims 1 to 16,
**characterized by** an LV 312 noise dampening of at least class B, preferably an LV 312 noise dampening in the range from 2 dB (A) to 5 dB (A).

18. Adhesive tape (1) according to any of Claims 1 to 17,
**characterized in that** the carrier (2) is a calendered and consolidated carrier, such that the air permeability of the woven fabric is less than 200 l/m²s and preferably in the range from 50 l/m²s to 100 lm²s, as measured to DIN 53 887 at a test pressure of 500 Pa.

19. Adhesive tape (1) according to any of Claims 1 to 18,
**characterized in that** the warp threads and the weft threads in the woven fabric of the first textile-type layer ply (4) and/or in the woven fabric of the second textile-type layer ply (5) each have the same type of constitution.

20. Adhesive tape (1) according to any of Claims 1 to 19,
**characterized in that** the warp threads and/or the weft threads in the woven fabric of the first textile-type layer ply (4) and/or in the woven fabric of the second textile-type layer ply (5) each have a fineness in the range from 110 dtex to 550 dtex, preferably a fineness of 167 dtex.

21. Adhesive tape (1) according to any of Claims 1 to 20,
**characterized in that** the warp threads and/or the weft threads in the woven fabric of the first textile-type layer ply (4) and/or in the woven fabric of the second textile-type layer ply (5) are each composed of from 24 to 144 filaments, preferably of 36 filaments.

22. Adhesive tape (1) according to any of Claims 1 to 21,
**characterized in that** the warp threads and/or the weft threads in the woven fabric of the first textile-type layer ply (4) and/or in the woven fabric of the second textile-type layer ply (5) are each textured.

23. Adhesive tape (1) according to any of Claims 1 to 22,
**characterized in that** the warp threads and/or the weft threads in the woven fabric of the first textile-type layer ply (4) and/or in the woven fabric of the second textile-type layer ply (5) are each intermingled, wherein there are in particular from 82 to 96 intermingling nodes per metre.

24. Adhesive tape (1) according to any of Claims 1 to 23,
**characterized in that** the carrier (2) comprises one of the colour combinations black/black, black/white and white/white for the textile-type layer plies (4, 5).

## Revendications

1. Ruban adhésif technique (1) hautement résistant à l'abrasion, en particulier ruban adhésif (1) enroulable sur lui-même en un rouleau de ruban adhésif, de préférence ruban en rouleau pour câbles (1), comportant un support bicouche (2) en forme de bande, qui est muni sur une face d'un revêtement d'adhésif sensible à la pression (3), le support (2) comprenant une première couche de stratification textile (4) constituée d'un tissu et une deuxième couche de stratification textile (5), qui sont solidement assemblées entre elles sur toute leur surface par une couche d'assemblage adhésif (6), la couche d'assemblage adhésif (6) présentant un poids par unité de surface dans la plage de 50 g/m² à 300 g/m², la deuxième couche de stratification textile (5) étant constituée d'un tissu, le tissu de la première couche de stratification textile (4) et le tissu de la deuxième couche de stratification textile (5) présentant chacun un poids par unité de surface dans la plage de 100 g/m² à 170 g/m², le revêtement d'adhésif (3) et la couche d'assemblage adhésif (6) consistant en un adhésif acétate ou acrylate, et une force d'adhérence de stratifié, déterminée selon DIN EN 1939, entre la première couche de stratification textile (4) et la deuxième couche de stratification textile (5) du support (2) étant supérieure à 10 N/cm et une résistance à la rupture du ruban adhésif (1), dans un essai selon DIN EN 14410, se situant dans la plage de 300 N/cm à 600 N/cm, la couche d'assemblage adhésif (6) consistant en un adhésif fusible, en particulier en un adhésif fusible qui est constitué majoritairement d'un copolymère d'acrylate-éthyle ou majoritairement d'un copolymère éthylène/acétate de vinyle, le copolymère étant modifié avec des résines acrylate réticulables sous UV et/ou contenant des groupes photoréactifs sous UV-C, incorporés par polymérisation.

2. Ruban adhésif (1) selon la revendication 1,
**caractérisé en ce que** le tissu de la deuxième couche de stratification textile (5) est le même tissu que le tissu de la première couche de stratification textile (4).

3. Ruban adhésif (1) selon la revendication 1 ou 2,
**caractérisé en ce que** le tissu de la première couche de stratification textile (4) et/ou le tissu de la deuxième couche de stratification textile (5) présente(nt) chacun un poids par unité de surface de 130 g/m².

4. Ruban adhésif (1) selon l'une quelconque des revendications 1 à 3,
**caractérisé en ce que** le tissu de la première couche de stratification textile (4) et/ou le tissu de la deuxième couche de stratification textile (5) est(sont constitué(s) chacun à base, en particulier à raison de 100 pour cent, de fibres de polyester constituées de poly(éthylène-téréphtalate).

5. Ruban adhésif (1) selon l'une quelconque des revendications 1 à 4,
**caractérisé en ce que** la couche d'assemblage adhésif (6) présente un poids par unité de surface de 80 g/m² à 150 g/m².

6. Ruban adhésif (1) selon l'une quelconque des revendications 1 à 5,
**caractérisé en ce que** lorsque l'adhésif fusible de la couche d'assemblage adhésif (6) est constitué majoritairement d'un copolymère d'acrylate-éthyle, ce dernier est un copolymère d'acrylate-éthyle-butyle ou un copolymère éthylène/acrylate d'éthyle, de préférence, lorsque le copolymère contient des groupes photoréactifs aux UV-C, incorporés par polymérisation, ces derniers se trouvent sur des chaînes latérales.

7. Ruban adhésif (1) selon l'une quelconque des revendications 1 à 6,
**caractérisé en ce que** le revêtement d'adhésif (3) consiste en le même adhésif fusible que la couche d'assemblage adhésif (6).

8. Ruban adhésif (1) selon l'une quelconque des revendications 1 à 7,
**caractérisé en ce que** le revêtement d'adhésif (3) présente un poids par unité de surface dans la plage d'environ 50 g/m² à 300 g/m², de préférence de 80 g/m² à 150 g/m².

9. Ruban adhésif (1) selon l'une quelconque des revendications 1 à 8,
**caractérisé par** une épaisseur (D) de moins de 0,5 mm, de préférence une épaisseur (D) dans la plage de 0,35 mm à 0,48 mm, de façon particulièrement préférée une épaisseur (D) dans la plage de 0,44 mm à 0,46 mm.

10. Ruban adhésif (1) selon l'une quelconque des revendications 1 à 9,
**caractérisé par** une force d'adhérence sur acier dans la plage de 5,0 N/cm à 15,0 N/cm, de préférence dans la plage de 7,5 N/cm à 9,0 N/cm dans un essai selon DIN EN 1939.

11. Ruban adhésif (1) selon l'une quelconque des revendications 1 à 10,
**caractérisé par** une force d'adhérence sur le dos du ruban dans la plage de 4,0 N/cm à 15,0 N/cm, de préférence dans la plage de 5,5 N/cm à 8,0 N/cm dans un essai selon DIN EN 1939.

12. Ruban adhésif (1) selon l'une quelconque des revendications 1 à 11,
**caractérisé par** une force de déroulement dans la plage de 2 N à 10 N, de préférence de 3 N à 7 N, dans un essai selon DIN EN 1944.

13. Ruban adhésif (1) selon l'une quelconque des revendications 1 à 12,
**caractérisé par** une résistance à la rupture dans la plage de 370 N/cm à 421 N/cm dans un essai selon DIN EN 14410.

14. Ruban adhésif (1) selon l'une quelconque des revendications 1 à 13,
**caractérisé par** un allongement à la rupture qui est supérieur à 20 pour cent et de préférence se situe dans la plage de 23 pour cent à 31 pour cent, dans un essai selon DIN EN 14410.

15. Ruban adhésif (1) selon l'une quelconque des revendications 1 à 14,
**caractérisé en ce qu'une** force d'adhérence de stratifié entre la première couche de stratification textile (4) et la deuxième couche de stratification textile (5) du support (2), déterminée selon DIN 1939, se situe dans la plage de 12 N/cm à 15 N/cm.

16. Ruban adhésif (1) selon l'une quelconque des revendications 1 à 15,
**caractérisé par** une résistance à l'abrasion selon LV 312 d'au moins de la classe E, en particulier par une résistance à l'abrasion de 7 500 à 9 200 courses, déterminée sur un mandrin de 5 mm.

17. Ruban adhésif (1) selon l'une quelconque des revendications 1 à 16,
**caractérisé par** une atténuation du bruit selon LV 312 d'au moins de la classe B, de préférence une atténuation du bruit dans la plage de 2 dB (A) à 5 dB (A) selon LV 312.

18. Ruban adhésif (1) selon l'une quelconque des revendications 1 à 17,
**caractérisé en ce que** le support (2) est calandré et consolidé, de sorte que la perméabilité du tissu à l'air est inférieure à 200 l/m²s et de préférence dans la plage de 50 l/m²/s à 100 l/m²s, mesurée selon DIN 53 887 sous une pression d'essai de 500 Pa.

19. Ruban adhésif (1) selon l'une quelconque des revendications 1 à 18,
**caractérisé en ce que** dans le tissu de la première couche de stratification textile (4) et/ou dans le tissu de la deuxième couche de stratification textile (5) les fils de chaîne et les fils de trame sont chacun de même nature.

20. Ruban adhésif (1) selon l'une quelconque des revendications 1 à 19,
**caractérisé en ce que** dans le tissu de la première couche de stratification textile (4) et/ou dans le tissu de la deuxième couche de stratification textile (5) les fils de chaîne et/ou les fils de trame présentent chacun une finesse dans la plage de 110 dtex à 550 dtex, de préférence de 167 dtex.

21. Ruban adhésif (1) selon l'une quelconque des revendications 1 à 20,
**caractérisé en ce que** dans le tissu de la première couche de stratification textile (4) et/ou dans le tissu de la deuxième couche de stratification textile (5) les fils de chaîne et/ou les fils de trame se composent chacun d'un nombre dans la plage de 24 à 144 filaments, de préférence de 36 filaments.

22. Ruban adhésif (1) selon l'une quelconque des revendications 1 à 21,
**caractérisé en ce que** dans le tissu de la première couche de stratification textile (4) et/ou dans le tissu de la deuxième couche de stratification textile (5) les fils de chaîne et/ou les fils de trame sont chacun texturés.

23. Ruban adhésif (1) selon l'une quelconque des revendications 1 à 22,
**caractérisé en ce que** dans le tissu de la première couche de stratification textile (4) et/ou dans le tissu de la deuxième couche de stratification textile (5) les fils de chaîne et/ou les fils de trame sont chacun entremêlés, en particulier 82 à 96 points d'entremêlement étant présents par mètre.

24. Ruban adhésif (1) selon l'une quelconque des revendications 1 à 23,
**caractérisé en ce que** dans le support (2) l'une des combinaisons de couleurs noir/noir, noir/blanc et blanc/blanc est présente pour les couches de stratification textiles (4, 5).
